# EUROPEAN PATENT APPLICATION

(11) **EP 1 298 829 A1**
(43) Date of publication of application: **02.04.2003**
(21) Application number: 02252543.0
(22) Date of filing: 10.04.2002
(51) Int. Cl.: H04L 1/06, H04L 1/18

(54) **HARQ techniques for multiple antenna systems**

(30) Priority: 28.09.2001 US 967009
(71) Applicant: LUCENT TECHNOLOGIES INC., Murray Hill, New Jersey 07974-0636 (US)
(72) Inventor: Rudrapatna, Ashok N., Basking Ridge, New Jersey , 07920 (US); Sharma, Naresh, Budd Lake, New Jersey, 07828 (US)
(74) Representative: Watts, Christopher Malcolm Kelway, Dr.

(57) **Abstract**

A method of retransmitting multiple error coded streams formed from one block of information, if errors are detected. A first process from the method includes forming multiple error coded streams from one block of information. Each of the at least two error coded streams may then be transmitted in response to a confirmation message. A second process from the method includes performing independent error detection on at least two received error coded streams. At least one confirmation message may be transmitted in response to the independent error detection performed on at least one of the received error coded streams.

## Description

### BACKGROUND OF THE INVENTION

### I. FIELD OF THE INVENTION

The present invention relates to Hybrid Automatic Repeat Request ("HARQ") techniques for a communication system employing multiple antenna system.

### II. DESCRIPTION OF THE RELATED ART

The efficiency of a communication system is determined by the quality of the communication channels therein. One measure of a communication system's efficiency is throughput. Throughput is defined as the amount of information successfully transmitted and received in a communication system over a defined period of time. It is therefore a goal of service providers (e.g., owners and operators of communication systems) to have as many of their communication channels as possible operating at an acceptable throughput.

In wireless communication systems, an air interface is used for exchanging information between a mobile unit(s) (e.g., cell phone) and a base station(s) or other communications system equipment(s). The quality of transmission over any one of the channels through the air interface, however, may vary over time due to fading, interference or the presence of noise, for example. Thus, any channel between the base station and a mobile unit may have an acceptable throughput at one instant in time and unacceptable throughput at another instant in time.

In view of the above, information may be transmitted over a relatively poor quality channel, depending on the instant in time. As a result, such information may contain errors once it is received. Communication systems generally employ techniques for re-transmitting the information, when errors are detected at the receiving equipment. Here, the transmitting equipment retransmits the information to the receiving equipment a number of times to increase the likelihood that the information, once received, is error-free. The receiving equipment may be system equipment, such as a base station, or subscriber equipment, including a cell phone, for example, while the transmitting equipment may be system or subscriber equipment. For the purposes of the present disclosure, system equipment may be defined as any equipment owned and operated by the service provider.

One widely known technique for re-transmitting the information is called Hybrid Automatic Repeat Request ("HARQ"). HARQ is a method, used in single antenna systems, for confirming that the information transmitted has been received without any errors. Initially, the receiving equipment sends a message to the transmitting equipment confirming the transmitted information was received without errors. If the transmitted information was received and no errors are detected, the receiving equipment sends a message (e.g., a positive acknowledgment or ACK) to the transmitting equipment. In the alternative, if an error(s) was detected in the information received, the receiving equipment sends a message (e.g., a negative acknowledgment or NACK) to the transmitting equipment requesting the retransmission of the previously transmitted information.

To implement an HARQ methodology and improve the likelihood that the information received is error-free, a channel coding scheme along with a re-transmission format is typically used. Channel coding schemes employed with HARQ methods utilize redundancy in the transmitted information for greater reliability. For the purposes of the present disclosure, we refer to the HARQ formatted streams as error coded streams also.

One known type of HARQ technique is a Chase combining protocol. A Chase combining protocol involves the formation of single packets of bits from one bit stream derived from one or more blocks of information. Using this protocol, each Chase packet is retransmitted upon request in response to a NACK. Consequently, each received Chase packet is decoded by the receiver in combination with the previously received failed transmission(s).

Another known type of HARQ technique is an Incremental Redundancy ("IR") protocol. The IR protocol involves the formation of IR sub-packets from one coded bit stream derived from one or more blocks of information. Here, in the event of an erroneous reception, the transmitter sends new sub-packets that constitutes additional redundancy party bits to the receiver to improve the signal detection process. The receiving equipment attempts to decode the additionally transmitted IR sub-packet(s) in combination with earlier transmission(s) of the original IR sub-packet containing the same user information. Thusly, retransmitted IR sub-packets are not repetitions of the previously transmitted IR sub-packet(s), in contrast with the Chase protocol. Decoding the combination of retransmitted IR sub-packets with the original IR sub-packet may reduce the number of retransmissions required to successfully receive the transmitted information.

Service providers continue to pursue methods for increasing the capacity. One area gaining greater attention involves the use of multiple antenna systems, such as multiple input multiple output ("MIMO") schemes, including Bell Labs Layered Space-Time ("BLAST"), for example. These multiple antenna systems create a multitude of possible paths for the transmission of information from one transmit antenna of one multiple antenna system to one receive antenna of another multiple antenna system.

While multiple antenna systems provide the potential for increased capacity, increasing their throughput remains an outstanding problem. Known re-transmitting techniques, such as the HARQ methods detailed hereinabove, were designed for single antenna systems. These re-transmitting techniques transmit a single Chase packet or a single IR sub-packet, for example, through a single antenna system at one instant in time if errors are detected in the receiving equipment. More particularly, each Chase packet or IR sub-packet is formed from a single stream of information in the form of bits for example, which are error coded from a block(s) of information. This reliance on a single error coded stream of bits in multiple antenna systems, as such, limits the throughput increases using these known re-transmitting techniques. Therefore, a re-transmitting technique, such as HARQ, is needed for multiple antenna systems where multiple streams of information may be transmitted simultaneously, to increase the throughput in a wireless communication system.

### SUMMARY OF THE INVENTION

To increase the throughput in a wireless communication system employing a multiple antenna system, our invention provides for a method of implementing a re-transmitting technique, such as HARQ, independently on at least two streams of bits. By our method, the two or more bit streams are error coded (e.g., per-stream encoded), thereby allowing each to be transmitted and/or received by at least one antenna of a multiple antenna system.

In one embodiment of the present invention, our method involves forming at least two error-coded streams from one block of information. For the purposes of the present invention, bit streams are formed from one block of information and undergo channel coding and modulation. Protocols such as Chase and IR work in conjunction with the channel coding and modulation to improve the reliability. Each of the at least two error coded streams may then be transmitted in response to a confirmation message.

In another embodiment of the present invention, our method involves performing independent error detection on at least two received and processed streams. Here, at least one confirmation message may be transmitted in response to the independent error detection performed on at least one of the received and processed streams.

For the purposes of the present invention, a confirmation message may refer to an acknowledgement ("ACK") or non-acknowledgement ("NACK") message, for example. Moreover, error detection may be realized by various different approaches, including cyclic redundancy checking, for example.

### BRIEF DESCRIPTION OF THE DRAWINGS

The present invention will be better understood from reading the following description of non-limiting embodiments, with reference to the attached drawings, wherein below:
**FIG. 1** depicts a flow chart for a first embodiment of the present invention;
**FIG. 2** depicts a flow chart for a second embodiment of the present invention;
**FIG. 3** depicts a first block diagram of a communications system according to the present invention; and
**FIG. 4** depicts a second block diagram of a communications system according to the present invention.

It should be emphasized that the drawings of the instant application are not to scale but are merely schematic representations, and thus are not intended to portray the specific dimensions of the invention, which may be determined by skilled artisans through examination of the disclosure herein.

### DETAILED DESCRIPTION

While multiple antenna systems provide the potential for increasing the capacity of communication systems, increasing their throughput remains an outstanding problem. Known re-transmitting techniques, such as the hereinabove detailed HARQ, were designed for single antenna systems. These re-transmitting techniques rely on transmitting a single error coded stream of bits. We have recognized that using these known re-transmitting techniques may limit the potential throughput increases available in multiple antenna systems. Multiple streams of data may be sent simultaneously on a multiple antenna system to improve its throughput. It is however, not clear as to how one can employ the HARQ techniques when there are more than one data stream.

We have invented a method for implementing a re-transmitting technique, such as HARQ, in a wireless communication system employing such a multiple antenna system. Our re-transmitting technique is performed on at least two error coded streams of bits. For the purposes of the present disclosure, the streams of bits are derived from the same block of information. Using our method, the two or more bit streams separately undergo channel encoding and modulation and are formatted in Chase packet or IR sub-packet depending on the HARQ protocol employed. Then they undergo a MIMO encoding step for each stream to be transmitted and/or received by at least one antenna of a multiple antenna system.

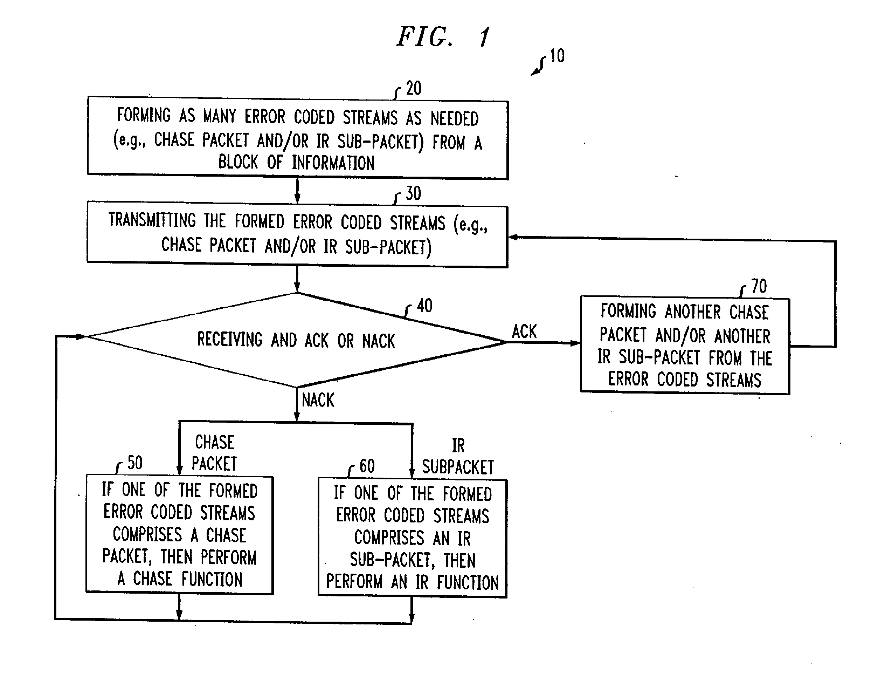

Referring to **FIG. 1**, a flow chart depicting a first embodiment of the present invention is illustrated. Here, a method **(10)** is shown for processing one block of information to be transmitted. More particularly, a source for information generates a number of blocks, one block at a time. Each block may comprise voice, data, facsimile or video information, for example. Moreover, each block may, for example, be formatted according to various known protocols, including packets, having a header component associated with the packet's destination and a load component associated with the information itself.

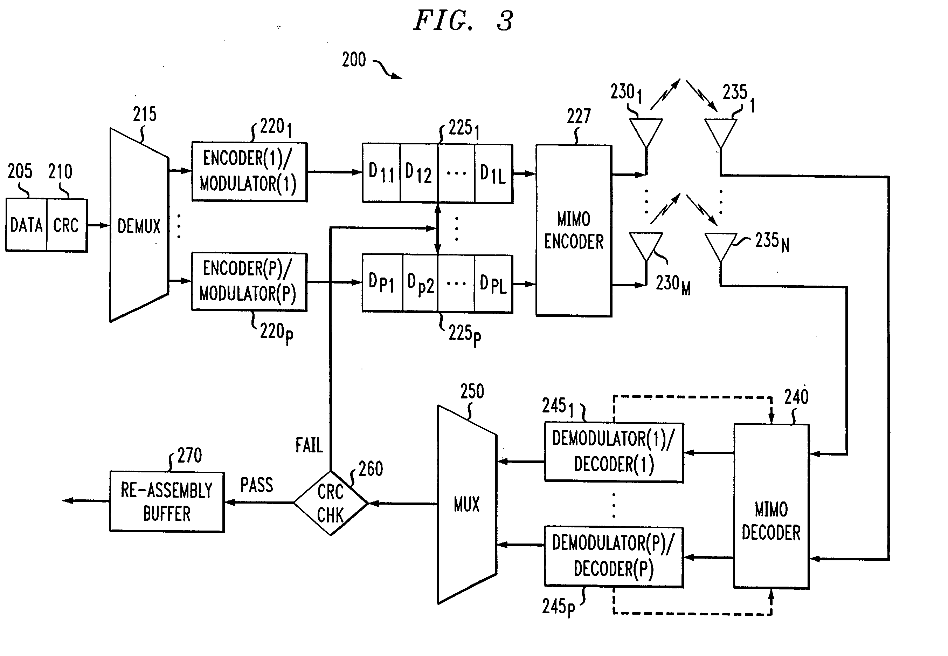

The method forms as many error coded streams as needed from each block generated by the information source. This method step **(20)** may be realized by various different techniques, each of which may include one or more steps. With reference to a first communication system architecture depicted in **FIG. 3**, for example, each block generated by the information source has a cyclic redundancy check added thereto. Thereafter, each block having the cyclic redundancy check is de-multiplexed into a number, ***p*,** of bit streams of information. The number ***p*,** could be less, equal, or more than the number of transmit antennas based on the MIMO encoding employed. Each bit stream of the ***p*** bit streams is then encoded. The term encoded here refers to the result of channel coding, which may be realized by various techniques known to skilled artisans. Each encoded bit stream is then modulated by one of any number of methods known to skilled artisans. It should be noted that each bit stream might be, in the alternative, modulated first, before undergoing a channel coding step. Subsequently, each encoded and modulated bit stream is formatted according to the HARQ technique employed.. Thusly, ***p*** number of error-coded streams is formed.

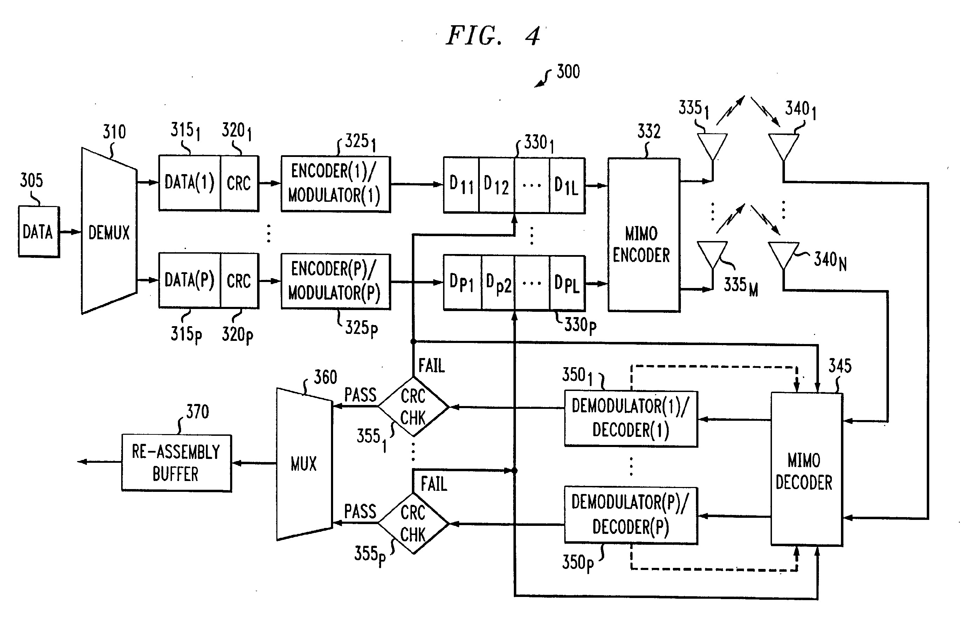

In contrast, a second communication systems architecture is depicted in **FIG. 4**. Here, each block generated by the information source is initially de-multiplexed into a predetermined number, ***p,*** of bit streams of information. Then each bit stream of the ***p*** bit streams has a cyclic redundancy check added thereto, and is then channel encoded, modulated and formatted according to the HARQ technique used. Various HARQ techniques may be used in either of the above exemplary communication systems illustrated in **FIGS. 3** or **4**. One representative protocol involves forming Chase packets from each bit stream, while another protocol involves forming IR sub-packets from each bit stream. Other protocols or combinations of protocols (e.g., both Chase packet and IR sub-packet) may be used and will be apparent to skilled artisan upon reviewing the instant disclosure.

Each of the formed ***p*** number of error coded streams (e.g., Chase packet(s) and/or IR sub-packet(s)) is thereafter transmitted **(30)** by the transmitting equipment using a multiple antenna system. Each error coded stream may be independently transmitted by one or more antennas of the multiple antenna system, depending on the scheme employed. The formed ***p*** number of error coded streams may require an additional encoding step associated with a multiple antenna system scheme. For example, a MIMO format may require each formed error coded bit stream to undergo a MIMO encoding step. The MIMO encoder takes ***p*** error coded streams as input and gives out ***m*** streams as output, where ***m*** is equal to the number of transmit antennas. The number ***p,*** could be less, equal, or more than ***m*** based on the MIMO encoding employed. The relation between ***p*** and ***m*** is dependent on the Space-Time or MIMO code used in the MIMO encoder and one could provide examples for different cases relations between the number of streams and the number of transmit antennas. Moreover, one or more error coded streams may be transmitted to a distinct receiver, such as a mobile unit or base station, for example. Therefore, one-to-many communication is also contemplated by the present invention.

After the output of the MIMO encoder is transmitted using the multiple antenna system, the transmitting equipment waits for a confirmation message **(40)** from the receiving equipment regarding the status of the reception. In that regard, the receiving equipment may transmit, for example, an acknowledgement ("ACK") message or a non-acknowledgement ("NACK") message to the transmitting equipment. If the transmitting equipment receives an ACK, the transmitting equipment forms **(70)** another ***p*** number of error coded bit streams for transmission from another single block of information.

If, however, the transmitting equipment receives an NACK, the HARQ technique is used for the re-transmissions. If Chase protocol is employed, then the same Chase packet is retransmitted **(50)**. Consequently, the receiver in combination with the previously received failed transmission(s) decodes each received Chase packet. Similarly IR protocol may also be employed **(60)**. For the purposes of the present disclosure, a Chase function and an IR function each refer to the application of a Chase or IR protocol, respectively.

The HARQ technique i.e. Chase or IR protocol continues to operate until an ACK is received. However, the HARQ protocol stops re-transmitting the failed transmission if the connection between transmitting and receiving equipment times out, for example. Here, a time-out refers to a period of time in which neither an ACK or a NACK are received, nor in the alternative, a predetermined number of consecutive NACKs are received. Another example of a condition for ceasing the HARQ protocol is a protocol error.

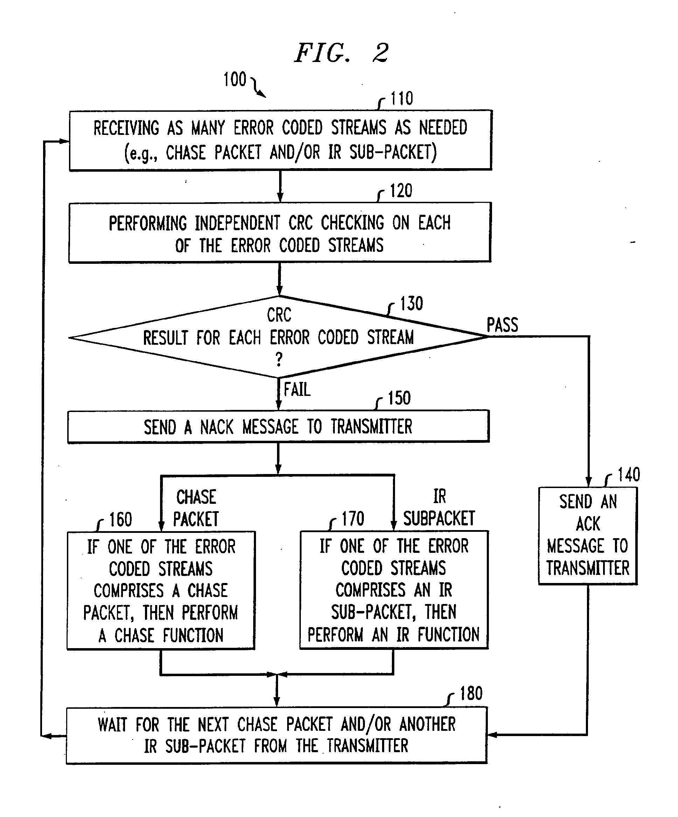

Referring to **FIG. 2**, a flow chart depicting a second embodiment of the present invention is illustrated. Here, a method **(100)** is shown for processing more than one received error coded stream. More particularly, this method involves performing independent error detection on more than one received error coded streams. As a result of this method, the block of original information from which each transmitted error coded stream is created, as detailed hereinabove in conjunction with the flow chart of **FIG. 1**, may effectively be recreated within the receiving equipment. It should be noted that various known methods may be employed with respect to the error coding prior to reception. Consequently, each stream may comprise, for example, Chase packets or IR sub-packets. Other protocols, or combinations of protocols (e.g., both Chase packet and IR sub-packet) may be used and will be apparent to skilled artisan upon reviewing the instant disclosure.

Initially, the multiple error coded streams are received **(110)** by the receiving equipment using a multiple antenna system. Each of the error coded streams (e.g., Chase packet(s) and/or IR sub-packet(s)) may be received by one or more antennas of the multiple antenna system, depending on the scheme employed. Consequently, the received error coded streams may require a decoding step associated with a multiple antenna system scheme. For example, a MIMO format may require each received error coded stream undergo a MIMO decoding step.

With reference to the first and second architectures of **FIGS. 3** and **4**, for example, a number, ***p***, of error coded streams are received by receiving equipment using a multiple antenna system. Thereafter, each received error coded stream is MIMO decoded, for example, and then demodulated according to the modulation scheme of the transmitting equipment. Consequently, any number of demodulation schemes known to skilled artisans may be employed. Each MIMO decoded, demodulated, received error coded stream is thereafter further decoded. Here, the term decoded refers to the result of channel decoding, which may be realized by various techniques known to skilled artisans. It should be noted that each received error coded stream might, in the alternative, be channel decoded first, before undergoing demodulation.

Thereafter, an error correction step **(120)** is independently performed on each of the ***p*** number of decoded, demodulated and MIMO decoded error coded streams. As will be detailed hereinbelow in association with **FIGS. 3** and **4**, this independent error detection step may be implemented using a number of distinct architectures. The step of is error detection may be realized by various known techniques, such as cyclic redundancy checking. Consequently, at least one confirmation message is generated **(130)** in response to independently cyclic redundancy checking each of the ***p*** decoded, demodulated and MIMO decoded error coded streams.

In the first architecture of **FIG. 3**, each of the ***p*** number of MIMO decoded, demodulated, error decoded streams are thereafter multiplexed. This multiplexing step creates a block of data for error detection, such as a cyclic redundancy check, for example. If the block of data fails this cyclic redundancy checking step, then a NACK is sent **(40)** by the receiving equipment. If these error coded streams, as multiplexed, pass the cyclic redundancy check or go undetected by the cyclic redundancy check, then an ACK is correspondingly sent **(40)** by the receiving equipment. Consequently, the resultant confirmation message is associated the multiplexed block of data passing or failing this step.

If an ACK is sent according to this first architecture, the block of passed error coded streams, as multiplexed, is stored in a buffer to recreate the block of original information from which each transmitted error coded stream was created within the transmitting equipment.

If, on the other hands, a NACK is sent, the failed error coded streams are processed according to the protocol employed, and the receiving equipment waits for the next error coded streams to be transmitted and received. Thusly, if one or more of the failed error coded streams comprises a Chase protocol, then the failed Chase packet(s) is combined with the next received Chase packet(s) **(50)** corresponding with that failed error coded stream(s), as sent by the transmitting equipment in response to the NACK. Similarly, if one or more of the failed error coded streams comprises an IR protocol, then the failed IR sub-packet (s) is stored and combined with the next received IR sub-packet(s) **(60)** corresponding with that failed error coded bit stream(s), as sent by the transmitting equipment in response to the NACK.

In contrast with the first architecture of **FIG. 3**, in the second architecture of **FIG. 4,** each of the ***p*** number of MIMO decoded, demodulated, error decoded bit streams is first independently detected for errors. Here, an independent error detection step **(120)**, such as cyclic redundancy checking, is performed on each of these error coded streams. While the number of distinct cyclic redundancy checking steps performed is equal to the number of error coded streams, variations on the ratio of cyclic redundancy checking steps to error coded bit streams are also contemplated herein.

In response to performing this independent cyclic redundancy checking, a confirmation message is sent **(130)** for each error coded stream. If one or more error coded streams pass their independent cyclic redundancy checking step, an ACK message is sent **(140)** by the receiving equipment for that error coded stream(s). In contrast, a NACK message is sent **(150)** by the receiving equipment for each error coded streams failing its independent cyclic redundancy checking step. For each NACK message sent, the corresponding failed error coded stream is processed according to the protocol employed, and, thereafter, the receiving equipment waits for the next error coded bit streams to be received. If one or more of the failed error coded bit streams comprises a Chase protocol, then the failed Chase packet(s) is combined with the next received Chase packet(s) **(160)** corresponding with that failed error coded stream(s), as sent by the transmitting equipment in response to the NACK. Similarly, if one or more of failed error coded streams comprises an IR protocol, then the failed IR sub-packet(s) is stored and combined with the next received IR sub-packet(s) **(170)** corresponding with that failed error coded stream(s), as sent by the transmitting equipment in response to the NACK.

Each of the received ***p*** number of error coded streams passing the cyclic redundancy check may be stored in a memory buffer, for example, until the remaining failed error coded bit streams pass the cyclic redundancy check. Thereafter, the passed, cyclic redundancy check ***p*** number of error coded streams are multiplexed. This multiplexing step creates a block of streams. This block is thereafter re-assembled using a buffer to recreate the original information from which each transmitted error coded stream was created within the transmitting equipment.

Referring to **FIG. 3**, a first block diagram of a communications system **200** having a transmitter and a receiver is illustrated. Here, the transmitter has a source for generating one block of information at a time. Each block comprises, for example, voice, data, facsimile or video information **205** and a cyclic redundancy check **210**. Each block is fed into a demultiplexer **215** for forming ***p*** streams of bits, which are each encoded (e.g., channel coding) and modulated by an encoder/modulator, **220**_{**1**} through **220**_{**p**}**.** Each channel coded and modulated stream of bits is thereafter mapped using a protocol, thereby creating *L* number of Chase packet(s) and/or IR sub-packet(s), for example, for each, now error coded stream, **225**_{**1**} through **225**_{**p**}. Each of the error coded stream, **225**_{**1**} through **225p,** are MIMO encoded by the MIMO encoder **227,** and transmitted through a number of antennas, **230**_{**1**} through **230**_{**m**}**,** associated with a multiple antenna system.

Moreover, the receiver comprises a number of antennas, **235**_{**1**} through **235**_{**n**}**,** associated with a multiple antenna system. The multiple antenna system receives the transmitted MIMO encoded, error coded streams from the transmitting equipment. The transmitted MIMO encoded, error coded stream are MIMO decoded by MIMO decoder **240** after reception such that an output is generated having ***p*** streams. Thereafter, each of the ***p*** streams are further processed by one of ***p*** demodulators/decoders, **245**_{**1**} though **245**_{**p**}**.** Each demodulator/decoder demodulates and decodes (e.g., channel decodes) the ***p*** received streams. Thereafter, the ***p*** received streams are multiplexed by multiplexer **250** to form a block of streams for error detection. Coupled with multiplexer **250** is a device **260** for performing independent error checking, such as cyclic redundancy checking, for example, on at least two bit streams. Device **260** causes the transmission of a confirmation message in response to performing error checking on at least two bit streams. Once the bit streams pass independent error checking device **260**, they are re-assembled by a buffer **270**. Buffer **270** recreates the block of original information from which each transmitted error coded stream was created within the transmitting equipment.

Referring to **FIG. 4**, a second block diagram of a communications system **300** having a transmitter and a receiver is illustrated. Here, the transmitter has a source for generating one block **305** of information at a time. Each block is fed into a demultiplexer **310** for forming ***p*** streams of bits. Each of these ***p*** streams of bits, as a result, comprises, for example, voice, data, facsimile or video information **315**_{**1**} through **315**_{**p**} and a cyclic redundancy check **320**_{**1**} through **320**_{**p**}**.** The ***p*** streams of bits are thereafter are each encoded (e.g., channel coding) and modulated by an encoder/modulator, **325**_{**1**} through **325**_{**p**}**.** Each channel coded and modulated stream of bits is thereafter mapped using a protocol, thereby creating *L* number of Chase packet(s) and/or IR sub-packet(s) for each, now error coded stream, **330**_{**1**} through **330**_{**p**}**.** The error coded streams, **330**_{**1**} through **330**_{**p**}**,** is MIMO encoded by the MIMO encoder **332** and transmitted through a number of antennas, **335**_{**1**} through **335**_{**m**}**,** associated with a multiple antenna system.

Moreover, the receiver comprises a number of antennas, **340**_{**1**} through **340**_{**n**}**,** associated with a multiple antenna system. The multiple antenna system receives the transmitted MIMO encoded, error coded streams from the transmitting equipment. The transmitted MIMO encoded, error coded stream are MIMO decoded by the MIMO decoder **345** after reception such that an output is generated having ***p*** streams. Thereafter, each of the ***p*** streams are further processed by ***p*** demodulators/decoders, **350**_{**1**} though **350**_{**p**}**.** Each demodulator/decoder demodulates and decodes (e.g., channel decodes) the ***p*** received streams. Thereafter, each of the ***p*** received streams are coupled with a device, **355**_{**1**} through **355**_{**p**}**,** for performing independent error checking, such as cyclic redundancy checking, for example, on at least two streams. Each device, **355**_{**1**} through **355**_{**p**}**,** causes the transmission of a confirmation message in response to performing error checking on a respective stream. Once the streams pass independent error checking devices, **355**_{**1**} through **355**_{**p**}**,** a multiplexer **360** is used to form a block of streams from the ***p*** streams. Thereafter, a re-assembly buffer **370** recreates the block of original information from which each transmitted error coded stream was created within the transmitting equipment.

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to one of ordinary skill in the art upon reference to this description without departing from the invention, as recited in the claims appended hereto.

## Claims

1. A method of processing a block of information, the method comprising:
forming at least two error coded streams from the block of information, the formed at least two error coded streams being transmitted in response to a confirmation message.

2. The method of Claim 1, wherein each of the at least two error coded streams is independently transmitted by at least one antenna of a multiple antenna system.

3. The method of Claim 1, wherein the at least two error coded streams comprise at least one of a Chase packet and an Incremental Redundancy sub-packet, and the confirmation message comprises at least one of an acknowledgement message and a non-acknowledgement message.

4. The method of Claim 3, further comprising at least one of:
retransmitting the Chase packet in response to the non-acknowledgement message; and
transmitting at least another Incremental Redundancy sub-packet in response to the non-acknowledgement message.

5. A method of processing received error coded streams, the method comprising:
performing independent error detection on at least two of the received error coded streams, wherein at least one confirmation message is transmitted in response to the performed independent error detection.

6. The method of Claim 5, wherein each of the at least two received error coded signals are independently received by at least one antenna of a multiple antenna system, and further comprising:
forming a block of information from the independent error detected at least two received error coded streams.

7. The method of Claim 5, wherein the step of performing independent error detection comprises cyclic redundancy checking the at least two error coded streams, the at least two error coded streams comprise at least one of a Chase packet and an Incremental Redundancy sub-packet, the at least one confirmation message comprises at least one of an acknowledgement message and a non-acknowledgement message, the acknowledgement message transmitted if at least one of the Chase packet and the Incremental Redundancy sub-packet of the two received error coded streams passes the step of cyclic redundancy checking, and the non-acknowledgement message transmitted if at least one of the Chase packet and the Incremental Redundancy sub-packet of the at least two received error coded streams fails the step of cyclic redundancy checking.

8. The method of Claim 7, further comprising:
transmitting at least another confirmation message in response to performing cyclic redundancy checking on at least one of the Chase packet and another Incremental Redundancy sub-packet from the at least two received error coded streams.

9. The method of Claim 8, wherein the failure of the Incremental Redundancy sub-packet causes at least one of an Incremental Redundancy function to be performed on at least one of the at least two received error coded streams and Chase function to be performed on at least one of the at least two received error coded streams.

10. The method of Claim 7, further comprising at least one of:
transmitting at least another confirmation message in response to performing cyclic redundancy checking on at least one of the Chase packet and another Incremental Redundancy sub-packet from the at least two received error coded streams.
